# EUROPEAN PATENT APPLICATION

(11) **EP 4 385 954 A1**
(43) Date of publication of application: **19.06.2024**
(21) Application number: 23214591.2
(22) Date of filing: 06.12.2023
(51) Int. Cl.: C02F 1/46, B63B 59/06, B08B 3/12, C02F 1/00, C02F 103/00

(54) **NAUTICAL VESSEL CLEANING**

(30) Priority: 13.12.2022 GB 202218740
(71) Applicant: Elodiz Ltd, High Wycombe HP11 2LT (GB)
(72) Inventor: Diz, Lozano, High Wycombe, HP11 2LT (GB)
(74) Representative: MacLean, Martin David

(57) **Abstract**

Apparatus and methods for cleaning and/or inhibiting the formation of biofouling from wetted and/or underwater surfaces of a nautical vessel or of an underwater structure comprising an inlet for admitting ambient water into a conduit for conducting the ambient water so as to flow between at least two electrodes of a plasma discharge generator, the plasma discharge generator being adapted to form a plasma between the at least two electrodes to thereby generate a flow of plasma-activated water, and at least one outlet for receiving the flow of plasma-activated water and adapted and/or configured to discharge plasma-activated water into the ambient water so that the plasma-activated water spreads over the wetted and/or underwater surfaces of the vessel.

## Description

### FIELD OF THE INVENTION

The present invention relates to methods and apparatus for cleansing the hulls of nautical vessels, or underwater structures, in particular but not exclusively to the removal of biofouling from the wetted and/or underwater surfaces of the vessel or of underwater structures.

### BACKGROUND ART

In use, the wetted or underwater surfaces of nautical vessels (which, as well as the hull of the vessel, includes other areas such as propellers, rudders, shafts and bow thrusters, all of which are in use submerged or exposed to the ambient water) accumulate microorganisms, barnacles, plants, algae and other biological materials whether the vessel is moving through freshwater or seawater; this is often referred to as "biofouling". Biofouling occurs at an increased rate when the vessel is stationary for a prolonged period, and occurs on vessels with hulls of most types of material (e.g. steel, glass/carbon fibre composite or wood). Biofouling is undesirable because it increases the hydrodynamic drag of the vessel as it moves through the water, and increased drag leads to a corresponding increase in the fuel needed to propel the vessel through the water. Biofouling may also affect the efficacy of any coating applied to the hull, and to equipment mounted to the hull of the vessel and which is important for the operation of the vessel, such as sonar emitters and sensors for echosounding, location of fish and the like. Left unchecked, biofouling can degrade hull materials and compromise the structural integrity of the vessel. Biofouling is also environmentally undesirable because a vessel carrying an invasive species may spread that species into new areas as the vessel travels through different regions, and from port to port. The largest area of most vessels is the hull, and most hull cleaning to remove biofouling is carried out when the vessel is in dock, either moored, at anchor, or in a dry dock, and is carried out principally using mechanical abrasive techniques, employing rotary brushes or the like. Such abrasive methods can damage any coating which has been applied to the hull of the vessel or even the hull of the vessel itself, particularly where the hull is formed of or has an outer layer of a non-metallic material, and it is difficult to prevent such damage when attempting to clean the vessel while it is moving through the water. Mechanical abrasion techniques are also generally unable to clean moving parts of the vessel, such as propellers, propeller shafts, rudders, bow- and stern-thrusters and the like, and have difficulties in cleaning areas where the surface geometry has deep cavities or depressions/folds, or is otherwise intricately shaped.

When the vessel is in dry dock, abrasive cleaning may be accompanied by the application of anti-fouling chemicals. Hull cleaning while the vehicle is stationary is timeconsuming, and means that the vessel has to remain inactive during cleaning - which is itself undesirable because the vessel is unable to carry out its commercial or other duties while it is stationary. In addition, the use of anti-fouling chemicals such as bleaches or permanganates is environmentally damaging. Other systems are being designed to carry out hull cleaning while the vessel is in use, such as is described in US 2022/0266963 for example; such systems allow the hull of the vessel to be cleaned while the vessel is in motion, but are not effective on many other areas of the vessel which are wholly or partially underwater such as the rudder, propellers and propeller shafts which cannot be cleaned effectively while in use because in use they need to move freely; in addition the operation of such systems needs to be monitored or controlled carefully to ensure that the whole hull has been effectively cleaned, and that no areas have been missed. Moreover, although systems such as that in US 2022/0266963 may be streamlined so as to add little hydrodynamic drag to the vessel, they still add to hydrodynamic drag, and they need to have some means to hold the system onto the hull to counteract being pulled away from the hull as the vessel moves through the water (which is easily done using electromagnets when the hull is ferromagnetic, but is more difficult where the hull material is non-metallic and non-magnetic. Other developing methods of hull cleansing utilise high pressure and cavitation water techniques, ultrasonic technology, ultraviolet light or laser cleaning, and some of these techniques are applied using underwater robots; such methods are technically complex and expensive. There is a need for a way to clean the hulls of vessels which is effective on a variety of surfaces on a vessel, including moving or intricately shaped surfaces, which does not damage the hull material, and which is environmentally friendly.

### SUMMARY OF THE INVENTION

The present invention is predicated on the use of plasma-activated water to inhibit and/or clean biofouling from underwater and/or wetted surfaces of a vessel, and is directed to associated apparatus and methods. Accordingly, the present invention provides apparatus for cleaning biofouling from wetted and/or underwater surfaces of a nautical vessel comprising an ambient water inlet for admitting ambient water into a conduit for conducting the ambient water so as to flow between at least two electrodes of a plasma discharge generator, the plasma discharge generator being adapted to form a plasma between the at least two electrodes to thereby generate a flow of plasma-activated water, and at least one outlet for receiving the flow of plasma-activated water and adapted and/or configured to discharge plasma-activated water into the ambient water so that the plasma-activated water spreads over the wetted and/or underwater surfaces of the vessel.

Plasma-activated water contains a high number of free radicals, such as OH, NOx and O2, which are highly reactive and interact with algae and larvae cells affecting cell morphology and deactivating or killing the cells. Plasma-activated water has a decontamination mechanism similar to that of strong oxidisers such as bleach or permanganates, but without their adverse environmental effects. The free radicals in plasma-activated water are short lived and do not have residual or secondary effects, and the concentration of these radicals can be controlled to ensure that only the necessary amount is applied to the vessel's surfaces, and that the radicals are of an energy sufficient to deactivate cell molecules but not strong enough (or are of a sufficiently short life) to ensure that they result in no chemical damage to the hull materials (whether the hull surface be metallic or made of some composite or other material). Apparatus in accordance with the invention does not require any other chemicals to operate effectively, only filtered ambient water ("ambient" water meaning the water the vessel floats on or in, be this seawater or freshwater), and therefore is more environmentally friendly than many conventional methods and does not harm the vessel's structure or outer surfaces. With an arrangement in accordance with the invention, a vessel may be equipped with a plasma discharge generator and an array of outlets for discharging plasma-activated water so as to form a layer of plasma-activated water around the hull of the vessel (on its underwater and/or wetted surfaces) to deactivate and inhibit the development of algae and barnacle larvae on the vessel. The apparatus may be used while the vessel is moving through the ambient water, so that the flow of ambient water helps spread the plasma-activated water over the vessel's surfaces, and also helps remove dead and dying algae or barnacles from the vessel. In addition, because the cleaning agent is a liquid, the apparatus can be used to clean/inhibit biofouling from moving parts of the vessel, such as the propeller, propeller shaft, rudder and bow- and stern-thrusters without risking damage to these parts, something which is not possible with existing mechanical cleaning apparatus which is intended for use while the vessel is in motion. Because the cleaning agent is a liquid, it can also be effective at cleaning areas of complicated geometry which are difficult to access with conventional mechanical abrasion equipment.

The at least one outlet may be located on the wetted and/or underwater surface of the vessel. Such an arrangement may be permanently attached to the outer surface of the vessel, or it may be part of a structure which is releasably attached to the hull for intermittent cleaning of biofouling. Where the at least one outlet is underwater, the forward motion of the vessel through the water assists in spreading the plasma-activated water over the underwater surfaces of the vessel; where the at least one outlet is located above the waterline, the outlet may be arranged to spray plasma-activated water around the outlet, allowing gravity to draw the water over the surface area below the outlet towards the waterline (it is preferable for outlets above the waterline to be located high up on the vessel, so that the plasma-activated water runs downwardly over as much of the wetted surface area above the waterline as possible). Because biofouling is generally less of a problem on vessel surfaces which are only wetted and not underwater for any substantial time, outlets above the waterline would discharge plasma-activated water at a rate significantly slower than would outlets which are underwater, because plasma-activated water discharged below the waterline would be constantly diluted by ambient water, and/or dispersed as a result of the vessel's motion through the ambient water.

Additionally or alternatively, the at least one outlet can be mounted to a boom and/or pipe which is/are movable relative to the wetted and/or underwater surfaces of the vessel. Such arrangements are capable of being used while the vessel is in motion, or while the vessel is in port or docked, in a similar fashion to some conventional mechanical cleaning equipment.

Alternatively, the at least one outlet may be mounted in a fixed position, such as in a dock or a marina, for a vessel to be floated above it. Wish such fixed arrangements, the plasma-discharge generator could be land- or pontoon-based, with a suitably programmed computer to control the flow of plasma-activated water to clean or inhibit the development of biofouling either constantly or intermittently, and to control the strength of the plasma-activated water as appropriate for the size and/or materials of the or each vessel. Such an arrangement may be combined with a land-based fixed apparatus, to enable particularly bad biofouling on one vessel to be cleaned without unnecessarily increasing the strength of the plasma-activated water generated by the fixed apparatus which is at a level sufficient to inhibit biofouling. There may be a computer to control the strength of the plasma discharge and/or the flow of plasma-activated water, to switch between inhibiting biofouling and cleaning biofouling, and to direct the plasma-activated water flow to berths where a vessel is docked.

The at least one outlet may be in the form of a nozzle adapted to discharge plasma-activated water as a jet into the ambient water surrounding the vessel, or it may be adapted to discharge plasma-activated water over the surface of the vessel above the waterline.

There may be a filter or filtration plant for filtering ambient water drawn into the ambient water inlet before this is passed through the plasma discharge generator, and/or there may be a bubble generator adapted to introduce gas bubbles into the plasma-activated water before it is discharged from the outlet into the ambient water. The process of generating plasma-activated water also generates gas, and the apparatus may incorporate a separator to remove this gas from the plasma-activated water before it is discharged into the ambient water. Ozone is very reactive and would therefore assist in the cleaning/inhibition of biofouling; some or all of the ozone generated may be mixed with the plasma-activated water (such as via the bubble generator). Some of the ozone generated could be introduced into the plasma-discharge generator to increase the generation of plasma-activated water.

Apparatus in accordance with the invention may be used to inhibit biofouling, whether the vessel is stationary or in motion. In addition to its use in cleaning or inhibiting biofouling from nautical vessels, apparatus in accordance with the invention may also be used for those purposes with any underwater structure, or a structure which has both an underwater part and a wetted surface above the waterline, such as a pier, quay, drilling rig or oil platform, or ambient water inlets subject to biofouling, such as those of desalination plants, water treatment plants and the like and the term 'underwater structure' used herein should be construed accordingly.

The invention also provides a method of cleaning biofouling from wetted and/or underwater surfaces of a nautical vessel, or of an underwater structure, comprising generating plasma-activated water and directing a flow of plasma-activated water towards/over the wetted and/or underwater surfaces of the nautical vessel. The step of directing a flow of plasma-activated water towards/over the wetted and/or underwater surfaces of the nautical vessel or underwater structure may be carried out intermittently (at a relatively high free radical strength level, to clean biofouling) or continuously (at a relatively low free radical strength level, to inhibit biofouling), or it may be carried out continuously at a relatively low free radical strength level and with intermittent periods at a relatively high free radical strength level.

The method may comprise controlling: a flow of water between at least two electrodes of a plasma discharge generator (in terms of its flow rate between the electrodes); and/or a discharge voltage between the at least two electrodes (higher voltage creates higher levels of free radicals, lower voltage lower levels) , and the flow of plasma-activated water (i.e. its volume and/or direction), such that the flow of plasma-activated water is effective to clean biofouling on the surfaces of the vessel.

Additionally or alternatively, the method may comprise controlling: a flow of ambient water between at least two electrodes of a plasma discharge generator; and/or a discharge voltage between the at least two electrodes, and the flow of plasma-activated water, such that the flow of plasma-activated water is effective to inhibit biofouling from occurring on the surfaces of the vessel, i.e. inhibit its formation and/or growth.

The plasma-activated water may be generated from ambient water surrounding the vessel, or it may be generated from a supply of water held in a tank on the vessel or from an onshore source (when the vessel is docked).

The method may comprise separating any gas generated during the step of generating plasma-activated water from the plasma-activated water before the flow of plasma-activated water is directed towards/over the wetted and/or underwater surfaces of the nautical vessel. Biofouling may be cleaned while the vessel is in motion, and/or biofouling may be inhibited and/or cleaned while the vessel is at rest, in a dock or marina, via a network of pipes with outlets situated under the berths for one or more vessels.

### BRIEF DESCRIPTION OF THE DRAWINGS

The invention will now be described by way of example and with reference to the accompanying figures, in which;
Figure 1 is a schematic side view of a vessel equipped with an embodiment of apparatus in accordance with the invention;
Figure 2 is a schematic plan view of the vessel of Figure 1 illustrating the main elements of the apparatus for generating and dispensing plasma-activated water;
Figure 3 is a schematic side view of a vessel equipped with an alternative embodiment of apparatus in accordance with the invention;
Figure 4 is a schematic side view of an alternative embodiment of apparatus in accordance with the invention, and
Figure 5 is a schematic view illustrating the main elements of an apparatus for generating and dispensing plasma-activated water in embodiments of the invention.

### DETAILED DESCRIPTION OF THE EMBODIMENTS

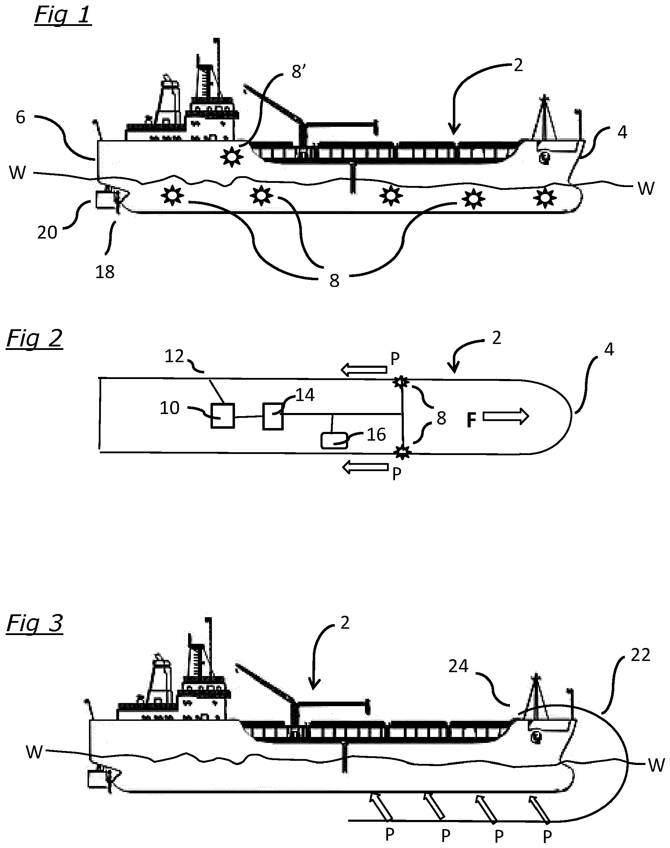

Figure 1 shows a vessel 2 having a bow 2 and a stern 4 moving right to left through ambient water having a choppy surface WW. Dispersed around the outer surface of the vessel are a number of nozzles 8, 8' for discharging plasma-activated water; the drawing shows several nozzles 8 beneath the waterline WW, and one nozzle 8' above the waterline WW (the placement and number of the nozzles 8, 8' is purely illustrative in the drawing, the exact number and location of the nozzles 8, 8' will be dictated by factors such as the size and shape of the outer surface of the vessel 2, its speed through the water, the nature of the ambient water (seawater, freshwater, brackish water) and the flow rate and the strength of the plasma-activated water discharged from the nozzles). The nature of the underwater nozzles 9 differs slightly from the nozzles 8' above the waterline WW, the underwater nozzles 8 are designed to act in combination with the flow of water past the outside of the vessel 2, which assists in spreading the plasma-activated water over the hull and other underwater surfaces of the vessel, whereas nozzles 8' above the waterline WW act in combination with gravity and (to an extent dependent on the vessel speed and the air speed and direction) with the air moving past the vessel to spread plasma-activated water over the wetted outer surface of the vessel 2.

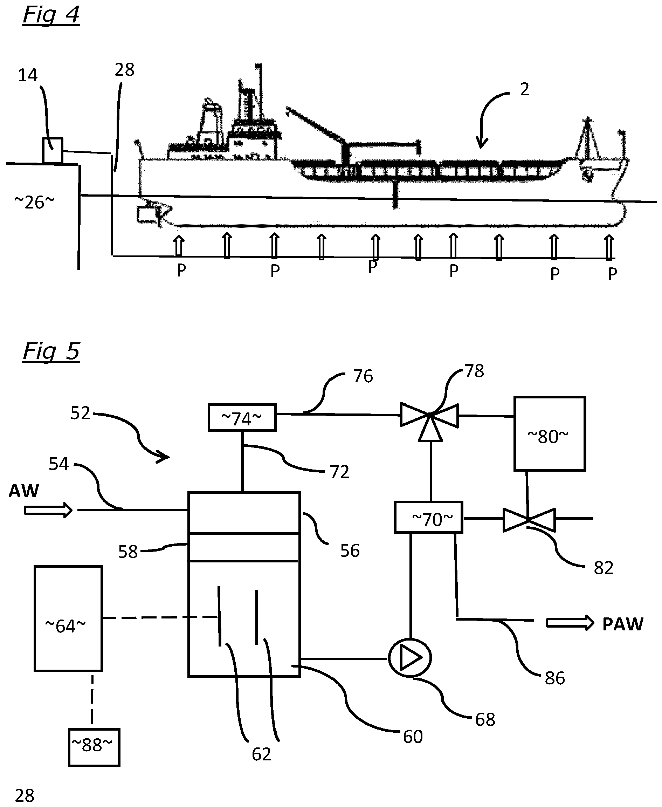

Figure 2 shows the main elements of the plasma-activated water system of Figure 1 (these elements are shown in more detail in connection with Figure 5); the vessel 2 is shown in plan view, and is moving forwards in the direction of the arrow F. For clarity, only two underwater nozzles 8 are shown in this drawing. A combined pump and filter unit 10 draws in ambient water through an underwater inlet 12 located on the outer surface of the hull of the vessel 2 (preferably distant from the locations 8 where plasma-activated water is discharged) and directs the filtered water to a plasma discharge generator 14. Here, the water passes between electrodes, suitably printed and with a hexagonal or circular geometry, where it is subjected to a high AC voltage of the order of 2kV at a frequency of about 5kHz to generate plasma-activated water. This plasma-activated water is pumped from the plasma discharge generator 14 towards the outlets/nozzles 8; an optional microbubble generator 16 feeds into the plasma-activated water before it exits the nozzles, so that the microbubbles entrain the plasma-activated water and helps to spread it over the underwater surfaces of the vessel 2, taking it into cavities and crevices and onto moving parts such as the propeller 18 and the rudder 20. The motion of the vessel 2 in direction F means that the ambient water interacts with the plasma-activated water so that the plasma-activated water discharged from the nozzles moves generally rearwardly, in the direction of the arrows P, but with an upward component due to the buoyancy of the microbubbles.

Figure 3 shows the vessel 2 with an alternative arrangement for dispensing the plasma-activated water onto the outer surfaces of the vessel 2; this consists of a boom 22, which is at least partially flexible, the proximal end 24 of which is connected to the plasma discharge generator, and the boom 22 deployed from the deck of the vessel. The boom is provided with perforations (or nozzles, not shown) located along its distal length, and the passage of ambient water pulls the distal length of the boom 22 so that it is approximately parallel to the length of the vessel 2. In operation, plasma-activated water is discharged from the perforations/nozzles and the passing ambient water causes this to flow in the direction of the arrows P onto and over the underwater surface of the vessel 2 to clean it of biofouling. In use, operators on the deck of the vessel 2 manipulate the proximal end 24 of the boom to ensure that plasma-activated water is spread thoroughly so that as much of the outer hull surface of the vessel 2 is cleaned of biofouling as possible. The boom 22 can also be manipulated to spray plasma-activated water onto the wetted surfaces of the hull, above the waterline WW.

Figure 4 shows the principle of a land-based system, for cleaning and/or inhibiting biofouling when a vessel 2 is moored, or berthed, near to a quayside 26 (or a pontoon). A plasma-discharge generator 14 is situated on the quayside/pontoon, and a pipe system 28 leads from the plasma-discharge generator 14 and under the berth and the vessel 2 for discharging plasma-activated water from outlets or nozzles (not shown) along the pipe system in the direction of the arrows P so as to spread over the underwater surface of the vessel; as with the arrangements in Figures 1 to 3, there may be a bubble generating apparatus to entrain bubbles with the flow of plasma-activated water and help carry the plasma-activated water upwardly onto the underwater surfaces of the vessel 2. The pipe system 28 is preferably anchored to the ground beneath the berth, and there may be a system for raising or lowering the pipe under the vessel 2 to move the pipe in relation to the vessel, which may ride at a varying heigh over the pipe according to whether the vessel is carrying a cargo or is riding high without a cargo. The apparatus forming the systems in Figures 1 to 4 is shown in more detail in relation to Figure 5, the arrangement of Figure 3 is only to show the general principle of a land-based embodiments of apparatus in accordance with the invention. Only one pipe 28 is shown in Figure 4, but it will be appreciated that there could be a network of pipes, with associated pumps, outlets, valves, etc. so as to discharge plasma-activated water upwardly so as to clean/inhibit biofouling for the hulls of a number of different vessels moored at different berths, with a suitable control system to regulate the flow of plasma-activated water between the different vessels, to give a constant or an intermittent flow to each vessel, and at different volumetric flow rates according to the size of the underwater surface and/or its degree of biofouling. The water supply to the plasma discharge generator may be drawn by pumps from the ambient water, and filtered, or it may be pumped from a separate supply of clean water (either filtered ambient water, or a supply of fresh water). In addition to the land-based apparatus shown, a manually operated boom or pipe similar to that in Figure 3 might be used to provide more directed cleaning.

Figure 5 is a schematic view of apparatus 52 in accordance with the invention, and as used in the ship-borne embodiments of Figures 1 to 3 or the land-based arrangement of Figure 4. Ambient water AW is pumped by any suitable pump (not shown) along conduit 54 to the plasma discharge vessel 56, where it passes through a filtration system 58 and into the plasma reactor chamber 60. The reactor 60 contains at least two electrodes, between which a high AC voltage is generated by a power generator 64 to create a cold plasma, and this activates the water passing generally downwardly through the reactor 60 from the filter system 58 towards the reactor outlet conduit 66, drawn by the pump 68. This plasma-activated water is directed to a mixing chamber 70.

The generation of plasma-activated water also generates gas, which includes activated ozone; activated ozone is very reactive, and is thus useful in killing algae and other biofouling material, but is also considered an undesirable pollutant and if it is to be used against biofouling it is therefore necessary to use this gas judiciously. Accordingly, gas generated at the plasma discharge electrodes 62 passes upwardly through the filter system 58 and is bled off from the plasma discharge vessel 56 through conduit 72 to collection chamber 74. A pump (not shown) draws gas and/or ozone from collection chamber 74 through conduit 76 to control valve 78, which selectively allows some gas/ozone to flow to mixing chamber 70, and/or some or all gas/ozone to flow to filtration chamber 80; here, the ozone may be at least partially deactivated such as by using a graphite filter, and some of the gas and/or ozone is directed for subsequent use in cleaning/inhibiting biofouling. Gas and deactivated ozone flows to valve 82, which selectively directs gas to flow to the mixing chamber70, or to discharge to atmosphere or for collection and further use along outlet conduit 84. Plasma-activated water mixed with ozone and/or gas and deactivated ozone PAW flows along conduit 86 to be discharged from the system towards the vessel (not shown) for cleaning biofouling. The gaseous component of this mixture leaving the mixing chamber 70 may be in the form of microbubbles, and/or there may be a separate microbubble generator for generating microbubbles (either from ambient air, or from gas drawn from outlet conduit 84) to mix with and entrain the plasma-activated water as it is discharged towards the vessel.

It will be understood that the apparatus of Figure 5 is a simplified version of the apparatus intended to show the principle of operation, and that in practice there will be additional systems, pumps, valves, sensors, etc. A computer 88 is incorporated in the plasma discharge generator (or located elsewhere on the vessel) to control the power generator 64, the pump 68 and the valves 78, 82 (for clarity the computer is shown operatively connected to the power generator 64 only, but in practice it would be connected also to control the other elements of the system) and other parts of the system, and may be responsive to sensors (not shown) which monitor the generation, quantities, qualities and flows of liquids and gases throughout the system, and the degree of biofouling and other ambient conditions which may need to be taken into account when cleaning/inhibiting biofouling, such as air and water temperature, density, viscosity, composition and salinity of the ambient water, and the vessel speed relative to ambient water.

It will of course be understood that many variations may be made to the above-described embodiment without departing from the scope of the present invention. For example, the means powering the plasma-discharge apparatus could be a battery or bank of batteries, the boom could take the form of a fully flexible hose and the boom could be used on an underwater structure, and a vessel could be equipped with an onboard system such as that of Figures 1 and 2 for cleaning purposes, but might rely on a land-based system such as that in Figure 4 for inhibiting biofouling in dock. A cleaning and/or inhibiting system could comprise a temporary structure which is releasably attached to the hull of the vessel (above and/or below the waterline) for a specified time. The outlets or nozzles for discharging plasma-activated water could be provided anywhere on the outer surface of the hull, closely adjacent to moving parts such as propeller, rudder, etc., and/or could be mounted to a removable part of the vessel's structure such as a daggerboard. The apparatus shown in Figure 5 may have a recirculation loop, so that some plasma-activated water PAW is mixed with ambient water which is drawn into the conduit 54; this ensures that the system is self-cleaning, or that biofouling is inhibited in the parts of the apparatus which are upstream of the reactor 60. The invention has been shown and described here primarily in relation to a ship, however this invention is applicable to any type of vessel or structure which moves through or is wetted by water, such as yachts, dinghies, submarines, submersibles, hovercraft, houseboats, barges, offshore platforms, drilling rigs, etc., as well as any type of underwater structure where biofouling is encountered. The invention has also been described in terms of the plasma-activated water being generated inside a reactor vessel, but it will be understood that the plasma discharge electrodes could be located outside and adjacent the vessel's hull, in the ambient water. Where different variations or alternative arrangements are described above, it should be understood that embodiments of the invention may incorporate such variations and/or alternatives in any suitable combination. So, a submarine might be equipped with an automatically deployable boom-type apparatus, which a static offshore platform could be equipped with an onboard system such as that of Figures 1 and 2.

## Claims

1. Apparatus for cleaning biofouling from wetted and/or underwater surfaces of a nautical vessel or underwater structure, the apparatus comprising an ambient water inlet for admitting ambient water into a conduit for conducting the ambient water so as to flow between at least two electrodes of a plasma discharge generator, the plasma discharge generator being adapted to form a plasma between the at least two electrodes to thereby generate a flow of plasma-activated water, and at least one outlet for receiving the flow of plasma-activated water and adapted and/or configured to discharge plasma-activated water into the ambient water so that the plasma-activated water spreads over the wetted and/or underwater surfaces of the vessel or structure.

2. Apparatus according to Claim 1, in which the at least one outlet is located on the wetted and/or underwater surface of a vessel.

3. Apparatus according to Claim 1, in which the at least one outlet is mounted to a boom and/or pipe which is/are movable relative to the wetted and/or underwater surfaces of the vessel or structure.

4. Apparatus according to Claim 1, in which the at least one outlet is mounted in a fixed position.

5. Apparatus according to any preceding claim, in which the at least one outlet is adapted to discharge plasma-activated water into the ambient water surrounding the vessel.

6. Apparatus according to any preceding claim further comprising a filter for filtering ambient water drawn into the ambient water inlet.

7. Apparatus according to any preceding claim further comprising a bubble generator adapted to introduce gas bubbles into the plasma-activated water before it is discharged from the outlet into the ambient water.

8. Apparatus according to any preceding claim when used to inhibit the formation/growth of biofouling.

9. A method of cleaning biofouling from wetted and/or underwater surfaces of a nautical vessel, or of an underwater structure, the method comprising generating plasma-activated water and directing a flow of plasma-activated water towards/over the wetted and/or underwater surfaces of the nautical vessel or underwater structure.

10. A method according to Claim 9, in which the step of directing a flow of plasma-activated water towards/over the wetted and/or underwater surfaces of the nautical vessel or structure is carried out intermittently.

11. A method according to Claim 9, in which the step of directing a flow of plasma-activated water towards/over the wetted and/or underwater surfaces of the nautical vessel or structure is carried out continuously.

12. A method according to Claim 10 or Claim 11 further comprising controlling: a flow of water between at least two electrodes of a plasma discharge generator; and/or a discharge voltage between the at least two electrodes, and the flow of plasma-activated water, such that the flow of plasma-activated water is effective to clean biofouling on the surfaces of the vessel or structure.

13. A method according to Claim 10 or Claim 11 further comprising controlling: a flow of ambient water between at least two electrodes of a plasma discharge generator; and/or a discharge voltage between the at least two electrodes, and the flow of plasma-activated water, such that the flow of plasma-activated water is effective to inhibit biofouling from occurring on the surfaces of the vessel or structure.

14. A method according to any of claims 9 to 13, in which the plasma-activated water is generated from ambient water surrounding the vessel or structure.

15. A method according to any of claims 9 to 14 further comprising separating any gas generated during the step of generating plasma-activated water from the plasma-activated water before the flow of plasma-activated water is directed towards/over the wetted and/or underwater surfaces of the nautical vessel or structure.
